# EUROPÄISCHE PATENTSCHRIFT

(11) **EP 1 894 065 B1**
(45) Veröffentlichungstag und Bekanntmachung des Hinweises auf die Patenterteilung: **18.04.2018**
(21) Anmeldenummer: 06753835.5
(22) Anmeldetag: 24.05.2006
(51) Int. Cl.: G05B 9/03

(54) **SICHERHEITSSCHALTVORRICHTUNG UND VERFAHREN ZUM SICHEREN ABSCHALTEN EINES VERBRAUCHERS IN EINER AUTOMATISIERT ARBEITENDEN ANLAGE**
SAFETY SWITCHING DEVICE AND A METHOD FOR THE SAFE SHUTDOWN OF A CONSUMER UNIT IN AN AUTOMATED INSTALLATION
DISPOSITIF DE CIRCUIT DE SECURITE ET PROCEDE POUR METTRE UN CONSOMMATEUR HORS CIRCUIT DE MANIERE SURE DANS UNE INSTALLATION AUTOMATIQUE

(30) Priorität: 21.06.2005 DE 102005030276
(43) Veröffentlichungstag der Anmeldung: 05.03.2008
(73) Patentinhaber: Pilz GmbH & Co. KG, 73760 Ostfildern (DE)
(72) Erfinder: VEIL, Richard, 70597 Stuttgart (DE)
(74) Vertreter: Witte, Weller & Partner Patentanwälte mbB
(86) Internationale Anmeldenummer: PCT/EP2006/004939
(87) Internationale Veröffentlichungsnummer: WO 2006/136260

(56) Entgegenhaltungen:
- GB-A- 2 142 206
- US-A1- 2002 180 278

## Beschreibung

Die vorliegende Erfindung betrifft eine Sicherheitsschaltvorrichtung, insbesondere zum sicheren Abschalten eines Verbrauchers in einer automatisiert arbeitenden Anlage, mit zumindest einem Eingang zum Aufnehmen eines analogen Eingangssignals, mit einem A/D-Wandler, der das analoge Eingangssignal in ein digitales Signal wandelt, mit einer Auswerte- und Steuereinheit, der das digitale Signal zugeführt ist, mit zumindest einem Ausgangsschaltelement, das von der Auswerte- und Steuereinheit in Abhängigkeit von dem digitalen Signal angesteuert wird, und mit einem analogen Signalkombinierer, der dazu ausgebildet ist, dem analogen Eingangssignal ein analoges Testsignal zu überlagern, um ein analoges Kombinationssignal zu bilden, wobei dem A/D-Wandler das analoge Kombinationssignal zugeführt ist.

Die Erfindung betrifft ferner ein Verfahren, insbesondere zum sicheren Abschalten eines Verbrauchers in einer automatisiert arbeitenden Anlage, mit den Schritten:
- Aufnehmen von zumindest einem analogen Eingangssignal,
- Wandeln des analogen Eingangssignals in ein digitales Signal,
- Auswerten des digitalen Signals und
- Ansteuern eines Ausgangsschaltelements in Abhängigkeit von dem digitalen Signal,
   wobei dem analogen Eingangssignal ein analoges Testsignal überlagert wird, um ein analoges Kombinationssignal zu bilden, und wobei das analoge Kombinationssignal in das digitale Signal gewandelt wird.

Eine solche Sicherheitsschaltvorrichtung und ein solches Verfahren sind aus GB 2 142 206A bekannt.

Automatisiert arbeitende Anlagen haben seit vielen Jahren eine zunehmende Verbreitung und Anwendung erhalten. Dies betrifft automatisiert arbeitende Anlagen bei der industriellen Produktion von Gütern ebenso wie automatisiert arbeitende Anlagen zur Beförderung von Personen oder Gütern, bspw. Transportbänder an Flughäfen oder Seilbahnen in Skigebieten. Auch in Vergnügungsparks und in der Gebäudeautomation finden automatisiert arbeitende Anlagen eine zunehmende Anwendung. Dabei spielen Sicherheitsaspekte zur Vermeidung von Personen- und Sachschäden eine immer größere Rolle, da von einer automatisiert arbeitenden Anlage grundsätzlich eine potenzielle Gefahr ausgeht, sei es durch eine Fehlbedienung oder durch einen Fehler im Arbeitsablauf der Anlage. Typische Maßnahmen zur Absicherung von automatisiert arbeitenden Anlagen sind die Einrichtung von Schutzbereichen mithilfe von Lichtschranken, Lichtgittern, Schutzzäunen etc. sowie das Bereitstellen von Not-Aus-Schaltern, die eine sichere Abschaltung der Anlage (oder eines Anlagenteils) ermöglichen. Es gibt jedoch Anwendungen, bei denen diese Maßnahmen nicht geeignet sind, bspw. wenn eine Werkzeugmaschine für einen neuen Produktionsablauf eingerichtet wird. In diesem Fall muss ein Maschinenbediener die richtige Zuführung und Bearbeitung eines Probewerkstücks bei geöffneter Schutztür kontrollieren und ggf. in den Produktionsablauf eingreifen. Typischerweise erfolgt ein solcher Einrichtbetrieb bei reduzierter Maschinendrehzahl, wobei die Einhaltung der reduzierten Drehzahl eine sicherheitsrelevante Prozessgröße darstellt.

Es ist bekannt, solche sicherheitsrelevanten Prozessgrößen redundant zu erfassen, um durch einen Plausibilitätsvergleich sicherzustellen, dass die Prozessgröße richtig erfasst wird. Ein entsprechend redundant ausgebildeter Drehzahlsensor ist bspw. in DE 199 37 737 A1 beschrieben. Es ist ferner bekannt, Not-Aus-Schalter, Schutztürschalter oder Lichtschranken aus Sicherheitsgründen redundant auszubilden.

Diese zuletzt genannten Meldegeräte unterscheiden sich von Drehzahlsensoren und anderen Sensoren zur Aufnahme von analogen Prozessgrößen dadurch, dass sie nur ein zweiwertiges Ausgangssignal liefern (Not-Aus-Schalter gedrückt oder nicht, Schutztür geöffnet oder geschlossen, Lichtschranke unterbrochen oder nicht). Es kann bei diesen zweiwertigen Meldegeräten vorkommen, dass sich das sicherheitsrelevante Ausgangssignal über lange Zeiträume hinweg nicht verändert, weil bspw. ein Not-Aus-Schalter tagelang oder sogar monatelang nicht betätigt wird und eine Schutztür stunden- oder tagelang nicht geöffnet wird. Um in diesen Fällen zu gewährleisten, dass der statische Signalzustand am Ausgang der zweiwertigen Meldegerätes nicht die Folge eine Fehlers ist, bspw. die Folge eines Leitungskurzschlusses nach einer Kabelquetschung, ist es bekannt, die Ausgangssignale von zweiwertigen Meldegeräten mit einem Taktsignal zu belegen (Zwangsdynamisierung). Eine entsprechende Sicherheitsschaltvorrichtung ist bspw. in DE 199 62 497 A1 beschrieben. Bei den Ausgangssignalen von analogen Meldegeräten, wie z.B. einem Drehzahlsensor, besteht dieses Problem auf Grund der kontinuierlichen Änderung des Sensorausgangssignals nicht. Andererseits kommt es hier nicht nur auf das Erkennen eines von zwei möglichen Signalzuständen an. Vielmehr ist der jeweilige Momentanwert des analogen Sensorsignals relevant.

Daher muss (auch) bei der Aufnahme eines sicherheitsrelevanten Analogsignals sichergestellt werden, dass die das Analogsignal aufnehmenden Schaltungsbestandteile fehlerfrei arbeiten. Dies gilt insbesondere, wenn das Analogsignal mit einem A/D-Wandler in ein digitales Signal umgewandelt wird, das dann zur Auswertung einer digitalen Auswerte- und Steuereinheit zugeführt ist. DE 100 35 174 A1 schlägt aus diesen Gründen vor, den Eingangskreis zur Aufnahme eines einkanaligen Analogsignals mit zwei redundanten Kanälen aufzubauen, wobei jeweils abwechselnd einer der Kanäle mit einem Testsignal belegt wird, während der andere Kanal das analoge Eingangssignal aufnimmt. Hierdurch lassen sich Funktionsfehler im Eingangskreis der Sicherheitsschaltvorrichtung frühzeitig erkennen. Außerdem ermöglicht der wechselseitige Test der redundanten Eingangskanäle eine kontinuierliche Aufnahme des analogen Eingangssignals. Nachteil dieser Lösung ist der hohe Aufwand, da bereits zur Aufnahme eines einkanaligen Analogsignals zwei redundante Eingangskanäle und ein Multiplexer zum Umschalten zwischen Eingangssignal und Testsignal benötigt werden.

Aus DE 100 37 737 A1 sind ein Verfahren und eine Vorrichtung zur sicheren einkanaligen Auswertung von (analogen) Sensorsignalen bekannt. Hier wird vorgeschlagen, aus den beiden redundanten Analogsignalen durch Summen- und Differenzbildung zwei zusätzliche Redundanzsignale zu erzeugen. Anschließend werden die beiden analogen Eingangssignale und die beiden Redundanzsignale digitalisiert und an eine Auswerte- und Steuereinheit übertragen. In einem Ausführungsbeispiel kann die Übertragung über eine einkanalige Übertragungsleitung erfolgen. Diese Vorgehensweise besitzt jedoch den Nachteil, dass grundsätzlich zwei redundante Eingangssignale benötigt werden, und die Übertragung eines einzelnen Messwertes erfordert eine mehrfache Signalwandlung (Summen-, Differenzbildung und Digitalisierung).

In DE 43 09 789 A1 ist vorgeschlagen, einen Testsignalgenerator in den analogen Sensor zu integrieren, wobei der Testsignalgenerator von der übergeordneten Auswerte- und Steuereinheit aktiviert werden kann. Nachteil dieses Vorschlages ist, dass während der Überprüfung des Eingangskreises der Sicherheitsschaltvorrichtung keine Sensorsignale zur Verfügung stehen. Außerdem erfordert dieser Vorschlag spezielle Analogsensoren mit integriertem Testsignalgenerator.

DE 196 40 937 A1 schlägt vor, einen A/D-Wandler im Eingangskreis einer Schaltung zur Aufnahme eines analogen Messsignals zu testen, indem das analoge Messsignal zeitweise unterdrückt (auf Masse gezogen) wird. Auch diese Vorgehensweise besitzt den Nachteil, dass das analoge Eingangssignal nicht kontinuierlich zur Auswertung zur Verfügung steht.

Die eingangs genannte GB 2 142 206 A offenbart ein Überwachungssystem zum Überwachen von Temperatursignalen in einem nuklearen Reaktor. Das System besitzt einen A/D-Wandler, der ein analoges Temperatursignal in einen digitalen Wert umsetzt. Mit einem Testsignalgenerator wird ein digitales Testsignal erzeugt, das über einen D/A-Wandler in ein analoges Signal umgesetzt wird. Das analoge Testsignal wird dem Temperatursignal überlagert, bevor dieses dem A/D-Wandler zugeführt wird. Einige der Testsignale sind so gewählt, dass sie eine unzulässige Temperatur oder eine unzulässige Temperaturänderung vortäuschen. Andere Testsignale haben nicht diese Auswirkung.

Vor diesem Hintergrund ist es eine Aufgabe der vorliegenden Erfindung, eine alternative Sicherheitsschaltvorrichtung der eingangs genannten Art und ein entsprechendes Verfahren anzugeben, die eine sichere und unterbrechungsfreie Aufnahme von analogen Eingangssignalen ermöglichen.

Diese Aufgabe wird nach einem Aspekt der Erfindung durch eine Sicherheitsschaltvorrichtung und ein Verfahren der eingangs genannten Art gelöst, wobei das analoge Testsignal ein pulsförmiges Signal mit Pulsabständen ist, die größer als die Abtastintervalle des A/D-Wandlers sind.

Die neue Sicherheitsschaltvorrichtung und das neue Verfahren beruhen damit auf der Idee, dem analogen Eingangssignal ein analoges Testsignal so zu überlagern, dass ein kombiniertes analoges "Eingangssignal" entsteht, in dem sowohl die Signalinformation des ursprünglichen analogen Eingangssignals als auch die Signalinformation des analogen Testsignals zeitgleich enthalten ist. Das analoge Kombinationssignal wird dem A/D-Wandler zugeführt und in ein digitales Kombinationssignal umgesetzt. Da die Signalinformation von beiden Ursprungssignalen in dem digitalen Kombinationssignal enthalten ist, kann die Auswerte- und Steuereinheit sowohl das ursprüngliche analoge Eingangssignal auswerten als auch die Funktionsfähigkeit der Bauelemente in dem Eingangskreis, insbesondere die Funktionsfähigkeit des A/D-Wandlers, überprüfen. Die Auswerte- und Steuereinheit muss lediglich die in dem digitalen Kombinationssignal enthaltenen Signalanteile wieder voneinander trennen, was aufgrund der determinierten Signalkombination ohne weiteres möglich ist.

Der Eingangskreis der neuen Sicherheitsschaltvorrichtung kann daher einkanalig ausgebildet sein, wenngleich eine zweikanalige Realisierung weiterhin möglich ist, um eine noch höhere Fehlersicherheit und darüber hinaus auch eine höhere Verfügbarkeit zu ermöglichen. Außerdem kann die neue Sicherheitsschaltvorrichtung die analogen Signale von Standardsensoren aufnehmen und auswerten, d.h. es sind keine speziellen, sicherheitsgerichteten Analogsensoren erforderlich. Von besonderem Vorteil ist ferner, dass das analoge Eingangssignal kontinuierlich überwacht und ausgewertet werden kann, so dass auf eine sicherheitsrelevante Änderung des eingangsseitigen Analogsignals sehr schnell reagiert werden kann.

Das analoge Testsignal ist ein pulsförmiges Signal mit Pulsabständen, die größer sind als die Abtastintervalle des A/D-Wandlers. Diese Ausgestaltung ermöglicht eine besonders einfache Trennung der zu Testzwecken kombinierten Signalanteile, da auf Grund dieser zeitlichen Parameter einige Abtastwerte des Kombinationssignals ohne überlagerten Testanteil sind. Der Testanteil kann daher durch einfache Subtraktion der aufeinander folgenden Abtastwerte in dem Kombinationssignal identifiziert werden.

Die oben genannte Aufgabe ist daher vollständig gelöst.

In einer Ausgestaltung der Erfindung ist ein D/A-Wandler vorgesehen, der das analoge Testsignal aus einem digitalen Testsignal erzeugt.

Diese Ausgestaltung ermöglicht eine sehr einfache und flexible Realisierung, da das digitale Testsignal nach der Analog-Digital-Wandlung des Kombinationssignals sehr einfach herausgerechnet werden kann. Darüber hinaus kann ein digitales Testsignal in einer digitalen Steuereinheit sehr einfach verändert werden, wodurch auch die Signalparameter des analogen Testsignals sehr einfach an eine Testumgebung angepasst werden können.

In einer weiteren bevorzugten Ausgestaltung erzeugt die Auswerte- und Steuereinheit das digitale Testsignal und überträgt es an den D/A-Wandler.

Diese Ausgestaltung ist besonders bevorzugt, weil die Auswerte- und Steuereinheit hier stets über die Signalparameter des zur Überprüfung verwendeten Testsignals informiert ist. Sie kann das Testsignal sehr einfach an das Analogsignal oder veränderte Anforderungen anpassen. Darüber hinaus ermöglicht diese Ausgestaltung eine kostengünstige Realisierung.

In einer weiteren Ausgestaltung ist der analoge Signalkombinierer ein analoger Addierer.

Ein analoger Addierer kann sehr einfach mithilfe eines kommerziell erhältlichen Operationsverstärkers realisiert werden. Darüber hinaus besitzt eine additive Überlagerung von analogem Testsignal und analogem Eingangssignal den Vorteil, dass die Signaltrennung anschließend sehr einfach durch eine Subtraktion erfolgen kann. Die Überprüfung der Bauelemente im Eingangskreis der neuen Sicherheitsschaltvorrichtung ist damit sehr kostengünstig und sehr schnell möglich, ohne dass das analoge Eingangssignal beeinflusst wird.

In einer weiteren Ausgestaltung ist ein Tiefpassfilter vorgesehen, das zwischen dem Eingang und dem analogen Signalkombinierer angeordnet ist. Bevorzugt liegt die Grenzfrequenz dieses Tiefpassfilters bei etwa 1 kHz.

Diese Ausgestaltung ist besonders vorteilhaft in Kombination mit einer additiven Überlagerung von analogem Eingangssignal und analogem Testsignal. Sie könnte jedoch bspw. auch bei einer multiplikativen Überlagerung verwendet werden. Dadurch, dass das Tiefpassfilter vor dem analogen Signalkombinierer sitzt, wird das analoge Eingangssignal auf eine maximale Eingangsfrequenz begrenzt. Das erst anschließend überlagerte Testsignal kann jedoch eine höhere Frequenz besitzen. Dieser Frequenzunterschied vereinfacht die spätere Auswertung des verwendeten Testsignals. Insbesondere ermöglicht das Tiefpassfilter, aufeinander folgende Abtastwerte des Kombinationssignals voneinander zu subtrahieren, um den Signalanteil aus dem Testsignal zu eliminieren, da das analoge Eingangssignal auf Grund der Beschränkung der Maximalfrequenz nur eine begrenzte Änderungsgeschwindigkeit besitzt. Daher lässt sich ein zulässiger Differenzbereich von aufeinander folgenden Abtastwerten sehr einfach festlegen.

In einer weiteren Ausgestaltung besitzt der A/D-Wandler einen maximalen Wandlerbereich, der größer ist als ein maximal zulässiger Dynamikbereich des analogen Eingangssignals.

Mit anderen Worten beinhaltet diese Ausgestaltung, dass das analoge Eingangssignal den Wandlerbereich des A/D-Wandlers nicht ausnutzt. Die Ausgestaltung besitzt den Vorteil, dass ein Testsignal auch dann zu dem analogen Eingangssignal addiert werden kann, wenn das analoge Eingangssignal seinen Maximalwert angenommen hat. Die additive Überlagerung ist daher unabhängig von dem Momentanwert des Eingangssignals möglich, was die Auswertung der beiden Signalanteile vereinfacht. Andererseits ermöglicht ein additiv überlagertes Testsignal, dass der A/D-Wandler über seinen gesamten Wandlerbereich getestet wird, wodurch sichergestellt ist, dass auch unerwartet hohe Amplitudenwerte des analogen Eingangssignals zuverlässig erkannt werden.

In einer weiteren Ausgestaltung ist die Auswerte- und Steuereinheit dazu ausgebildet, die aufeinander folgenden Werte des digitalen Signals miteinander zu vergleichen und ein Fehlersignal zu erzeugen, wenn sich die aufeinander folgenden Werte um mehr als einen definierten Differenzwert voneinander unterscheiden.

Diese Ausgestaltung macht von den bereits beschriebenen Möglichkeiten Gebrauch. Sie ermöglicht eine besonders einfach Realisierung des neuen Verfahrens und der neuen Sicherheitsschaltvorrichtung. Darüber hinaus kann die Auswertung des Kombinationssignals in dieser Ausgestaltung sehr schnell erfolgen.

In einer weiteren Ausgestaltung ist zumindest ein Ausgang vorgesehen, der in Abhängigkeit von dem analogen Eingangssignal, jedoch unabhängig von dem analogen Testsignal variiert.

Mit anderen Worten ist in dieser Ausgestaltung zumindest ein Ausgang vorgesehen, an dem ein Signal anliegt, das nicht von dem überlagerten Testsignal beeinflusst ist. Besonders bevorzugt handelt es sich hier um ein Signal, insbesondere ein Digitalsignal, das im Wesentlichen dem analogen Eingangssignal entspricht. Die Ausgestaltung ermöglicht die direkte weitere Verarbeitung des analogen Eingangssignals, bspw. im Rahmen einer Regelung. Auf Grund der Überprüfung des Eingangskreises mithilfe des überlagerten Testsignals kann das bereitgestellte Ausgangssignal jedoch als "sicheres Signal" weiter verarbeitet werden.

In einer weiteren Ausgestaltung sind zumindest zwei Eingänge zur Aufnahme von zumindest zwei analogen Eingangssignalen sowie zumindest zwei analoge Signalkombinierer vorgesehen, die dazu ausgebildet sind, jedem der zumindest zwei analogen Eingangssignale ein analoges Testsignal zu überlagern. Vorzugsweise sind auch zumindest zwei A/D-Wandler und zumindest zwei Auswerte- und Steuereinheiten (bzw. eine zweikanalige Auswerte- und Steuereinheit) vorgesehen, so dass eine durchgehend zweikanalige Signalverarbeitungsstrecke gebildet wird.

Diese Ausgestaltung ermöglicht eine besonders flexible Nutzung der neuen Sicherheitsschaltvorrichtung, da einerseits redundante Analogsignale verarbeitet werden können und andererseits - ohne Änderung an der Sicherheitsschaltvorrichtung - auch einkanalige Analogsignale verarbeitet werden können. Die neue Sicherheitsschaltvorrichtung kann in dieser Ausgestaltung sehr flexibel an wechselnde Einsatzumgebungen angepasst werden.

In einer weiteren Ausgestaltung ist die Auswerte- und Steuereinheit dazu ausgebildet, zwei zueinander invertierte analoge Eingangssignale auszuwerten.

Diese Ausgestaltung ist besonders vorteilhaft für Anwendungen, in denen starke elektromagnetische Störfelder vorhanden sind. Durch Auswertung von zueinander invertierten analogen Eingangssignalen, bspw. mithilfe einer Differenzbildung, können derartige Störungen sehr wirkungsvoll eliminiert werden. Diese Ausgestaltung ermöglicht daher eine Realisierung, die besonders hohe Fehlersicherheit bei der Aufnahme von Analogsignalen besitzt.

In einer weiteren Ausgestaltung ist die Auswerte- und Steuereinheit räumlich getrennt von dem A/D-Wandler und dem analogen Signalkombinierer angeordnet, wobei am Ausgang des A/D-Wandlers eine Hilfssteuereinheit angeordnet ist, die mit der Auswerte- und Steuereinheit kommuniziert. In einem bevorzugten Beispiel erfolgt die Kommunikation über eine einkanalige Übertragungsstrecke in codierter Form, wie dies für sich genommen aus DE 103 20 522 A1 bekannt ist. Alternativ hierzu erfolgt die Kommunikation in anderen bevorzugten Ausführungsbeispielen über ein Bussystem, beispielsweise eine CAN-Busverbindung.

Diese Ausgestaltung vereinfacht die Realisierung der vorliegenden Erfindung in weitläufigen Anlagen und sie trägt daher zu einer Reduzierung der Installationskosten bei. Außerdem wird ermöglicht, mehrere Sensoren mit analogen Ausgangssignalen mit einer gemeinsamen Auswerte- und Steuereinheit auszuwerten. Letzteres ist auch für einen modularen Aufbau der Sicherheitsschaltvorrichtung von Vorteil, bei dem die einzelnen Module räumlich zwar nicht weit voneinander entfernt sind, jedoch wahlweise zusammengefügt werden können. Besonders bevorzugt ist eine Realisierung, in der die Auswerte- und Steuereinheit ein so genanntes Kopfmodul ist, an das eine Vielzahl von unterschiedlichen E/A-Modulen (Eingangs- und Ausgangsmodule) angeschlossen werden können. Der Eingang mit dem A/D-Wandler und dem analogen Signalkombinierer bilden in diesem Fall eine modulartige Eingabeeinheit.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein vereinfachtes Blockschaltbild zur Erläuterung eines ersten Ausführungsbeispiels der neuen Sicherheitsschaltvorrichtung,
- Fig. 2: einen beispielhaften Verlauf eines analogen Eingangssignals mit überlagertem analogen Testsignal, und
- Fig. 3: ein vereinfachtes Flussdiagramm zur Erläuterung des neuen Verfahrens.

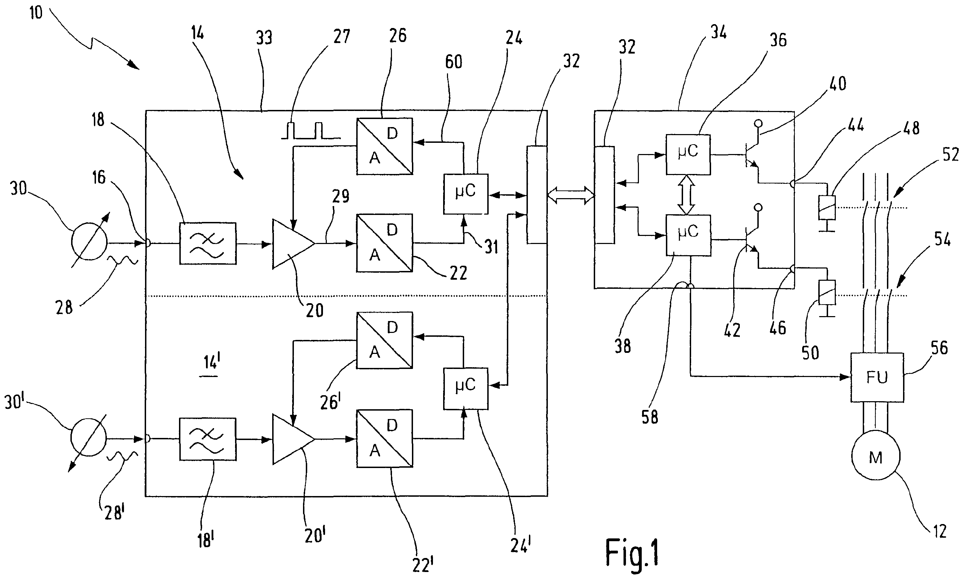

In Fig. 1 ist ein Ausführungsbeispiel der neuen Sicherheitsschaltvorrichtung in seiner Gesamtheit mit der Bezugsziffer 10 bezeichnet. Die Sicherheitsschaltvorrichtung 10 dient hier zum sicheren Abschalten eines Verbrauchers in einer automatisiert arbeitenden Anlage. Beispielhaft ist ein Motor 12 dargestellt, der in Abhängigkeit von einem eingangsseitigen Sensorsignal fehlersicher abgeschaltet werden muss. Fehlersicher bedeutet in diesem Zusammenhang, dass die Sicherheitsschaltvorrichtung 10 zumindest die Anforderungen der Kategorie 3 der europäischen Norm EN954-1 oder vergleichbare Anforderungen im Sinne der IEC 61508 und/oder ISO 13849-1 erfüllt.

Die Sicherheitsschaltvorrichtung 10 beinhaltet einen Eingangskreis 14 mit einem Eingang 16, einen mit dem Eingang 16 verbundenen Tiefpass 18 und einen mit dem Tiefpass 18 verbundenen Signalkombinierer. Der Signalkombinierer ist hier als analoge Addierschaltung bzw. analoger Addierer 20 ausgebildet. Analoge Addierer 20 können mithilfe eines Operationsverstärkers einfach realisiert werden. Derartige Schaltungen gehören zum Grundwissen eines auf diesem Gebiet tätigen Fachmanns, und sie sind hier aus Gründen der Übersichtlichkeit nicht näher dargestellt.

Der Ausgang des Addierers 20 ist mit einem A/D-Wandler 22 verbunden. Der Ausgang des A/D-Wandlers 22 führt auf einen Mikrocontroller 24. Darüber hinaus ist der Mikrocontroller 24 mit einem D/A-Wandler 26 verbunden, der ein analoges Signal 27 an den Addierer 20 liefert. Der Addierer 20 überlagert das analoge Signal 27 und das durch den Tiefpass 18 begrenzte analoge Eingangssignal 28 eines an den Eingang 16 angeschlossenen, analogen Sensors 30. Am Ausgang des Addierers 20 liegt damit ein analoges Kombinationssignal 29 an. Dieses wird mit dem A/D-Wandler 22 in ein digitales Kombinationssignal 31 umgewandelt. Bei dem Sensor 30 kann es sich bspw. um einen Drehzahlsensor, einen Temperatursensor, einen Drucksensor und anderes handeln.

Die Sicherheitsschaltvorrichtung 10 ist in Fig. 1 mit einem zweiten, redundanten Eingangskreis 14' dargestellt. Die Komponenten des redundanten Eingangskreises 14' sind mit denselben Bezugszeichen bezeichnet wie beim Eingangskreis 14, jedoch jeweils mit einem Strich markiert. Die Ausbildung der Sicherheitsschaltvorrichtung 10 mit zwei redundanten Eingangskreisen 14, 14' bietet eine hohe Flexibilität, da die beiden Eingangskreise 14, 14' wahlweise redundant oder auch separat voneinander verwendet werden können. Grundsätzlich kann die Sicherheitsschaltvorrichtung 10 jedoch auch mit nur einem Eingangskreis 14 realisiert werden und es wird daher im folgenden nur auf den einen Eingangskreis 14 Bezug genommen.

In dem Ausführungsbeispiel mit zwei redundanten Eingangskreisen 14, 14' ist es bevorzugt, wenn der Eingangskreis 14' zur Aufnahme eines invertierten analogen Eingangssignals 28' von einem invertierenden Sensor 30' ausgebildet ist. Die Auswertung von invertierten analogen Eingangssignalen 28, 28' ermöglicht die einfache Unterdrückung von elektromagnetischen Störungen, die die Eingangssignale 28, 28' überlagern, indem in der nachfolgenden Auswerte- und Steuereinheit eine Differenzbildung durchgeführt wird.

Der Mikrocontroller 24 ist hier mit einer Schnittstelle 32 verbunden. Er kommuniziert über die Schnittstelle 32 mit einer übergeordneten (hier zweikanaligen) Auswerte- und Steuereinheit 34. Die Auswerte- und Steuereinheit 34 kann räumlich von dem Eingangskreis 14 abgesetzt sein. Die Schnittstelle 32 kann eine Busschnittstelle sein, bspw. auf Basis des sog. SafetyBus®, der von der Anmelderin der vorliegenden Erfindung entwickelt und vertrieben wird. Alternativ hierzu kann die Übertragung zwischen dem Eingangskreis 14 und der Auswerte- und Steuereinheit 34 auch über eine einkanalige Übertragungsleitung erfolgen, wie sie in DE 103 20 522 A1 beschrieben ist. Darüber hinaus kann die Kommunikation generell zweikanalige erfolgen, oder die Auswerte- und Steuereinheit 34 kann zusammen mit dem Eingangskreis 14 ein kompaktes, integriertes Sicherheitsschaltgerät bilden.

In einem besonders bevorzugten Ausführungsbeispiel bilden sind der Eingang 16, der Signalkombinierer 20 und der A/D-Wandler 22 zusammen mit den weiteren dargestellten Baugruppen in einem Modulgehäuse 33 angeordnet, das als Eingabemodul an ein so genanntes Kopfmodul angeschlossen wird, wobei letzteres die Auswerte- und Steuereinheit 34 beinhaltet. Die Kommunikation zwischen dem Eingabemodul 33 und dem E/A-Modul 34 erfolgt dann beispielsweise über einen "Rückwandbus", auf den die einzelnen Module aufgesteckt werden. In einem Ausführungsbeispiel basiert der Rückwandbus auf dem CAN-Bus.

Die Auswerte- und Steuereinheit 34 ist hier zweikanaligredundant aufgebaut, was anhand von zwei Mikrocontrollern 36, 38 vereinfacht dargestellt ist. Die Auswerte- und Steuereinheit 34 kann bspw. eine programmierbare Sicherheitssteuerung sein, wie sie von der Anmelderin der vorliegenden Erfindung unter der Bezeichnung PSS® vertrieben wird. Alternativ hierzu kann die Auswerte- und Steuereinheit 34 ein Sicherheitsschaltgerät sein, wie es von der Anmelderin der vorliegenden Erfindung unter der Bezeichnung PNOZ® in verschiedenen Varianten angeboten wird, oder es handelt sich um das schon erwähnte Kopfmodul für einen modulartigen Aufbau.

Jeder der beiden Mikrocontroller 36, 38 ist hier mit einem ausgangsseitigen Schaltelement 40, 42 verbunden. Die Schaltelemente 40, 42 stellen jeweils ein Ausgangssignal an Ausgängen 44, 46 bereit. Das Ausgangssignal ist hier als potenzialbezogenes Ausgangssignal dargestellt. Alternativ hierzu könnten die Ausgangsschaltelemente 40, 42 bspw. potentialfreie Relaiskontakte sein.

An die Ausgänge 44, 46 der Auswerte- und Steuereinheit 34 sind hier zwei Schütze 48, 50 angeschlossen. Die Arbeitskontakte 52, 54 der Schütze 48, 50 liegen in Reihe zueinander und in Reihe zu der Stromversorgung für den Motor 12. Zwischen dem Motor 12 und den Arbeitskontakten 52, 54 der Schütze 48, 50 ist außerdem noch ein Frequenzumrichter 56 angeordnet. Der Frequenzumrichter 56 wird über ein Signal am Ausgang 58 der Auswerte- und Steuereinheit 34 gesteuert und er bestimmt die Drehzahl des Motors 12 in Abhängigkeit von den Eingangssignalen 28, 28'. Dazu wertet die Auswerte- und Steuereinheit 34 die mit den Eingangskreisen 14, 14' aufgenommenen, analogen Eingangssignale 28, 28' aus und erzeugt das Stellsignal am Ausgang 58 für den Frequenzumrichter 56.

Um die fehlerfreie Funktion der Eingangskreise 14, 14' und insbesondere der A/D-Wandler 22, 22' zu überwachen, wird den analogen Eingangssignalen 28, 28' jeweils ein Testsignal 27 überlagert, das in der nachfolgend erläuterten Weise ausgewertet wird. In einem bevorzugten Ausführungsbeispiel wird das Testsignal in Form eines digitalen Testsignals 60 von der Auswerte- und Steuereinheit 34 erzeugt. Der D/A-Wandler wandelt das digitale Testsignal 60 in ein analoges Testsignal 27 um. Das analoge Testsignal 27 wird in dem analogen Addierer 20 dem analogen Eingangssignal 28 (bzw. 28') überlagert.

Das Kombinationssignal 29 aus analogem Eingangssignal 28 und analogem Testsignal 27 wird mithilfe des A/D-Wandlers 22 in ein digitales Kombinationssignal 31 umgewandelt und anschließend im Mikrocontroller 24 so aufbereitet, dass es über die Schnittstelle 32 an die Auswerte- und Steuereinheit 34 übertragen werden kann. Alternativ hierzu könnte das digitale Testsignal 60 auch in dem Mikrocontroller 24 erzeugt werden.

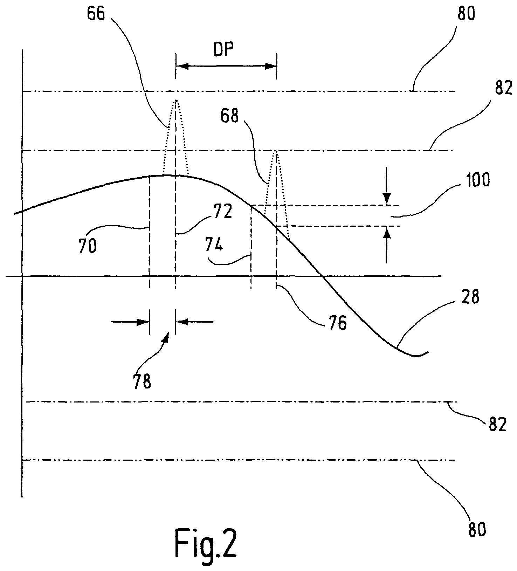

In Fig. 2 ist ein Ausschnitt aus dem analogen Eingangssignal 28 dargestellt, dem das analoge Testsignal 27 überlagert ist. Das analoge Testsignal 27 beinhaltet hier mehrere Pulse 66, 68, deren Abstand voneinander mit DP bezeichnet ist. Bei den gestrichelten Linien 70, 72, 74, 76 sind Abtastwerte des analogen Kombinationssignals 29 dargestellt, die der A/D-Wandler 22 entnimmt und in digitale Werte umsetzt. Der Abstand zwischen zwei Abtastwerten, d.h. das Abtastintervall des A/D-Wandlers 22, ist bei Bezugsziffer 78 dargestellt.

Mit den Linien 80 ist der obere und untere Grenzwert des Wandlerbereichs des A/D-Wandlers 22 angedeutet. Demgegenüber zeigen die Linien 82 den maximalen Dynamikbereich des Eingangssignals 28. Wie man in Fig. 2 erkennen kann, ist der Dynamikbereich 82 hier kleiner als der Wandlerbereich 80 des A/D-Wandlers 22 zulassen würde. Alternativ hierzu könnte das Eingangssignal 28 den Wandlerbereich 80 des A/D-Wandlers 22 grundsätzlich voll ausnutzen.

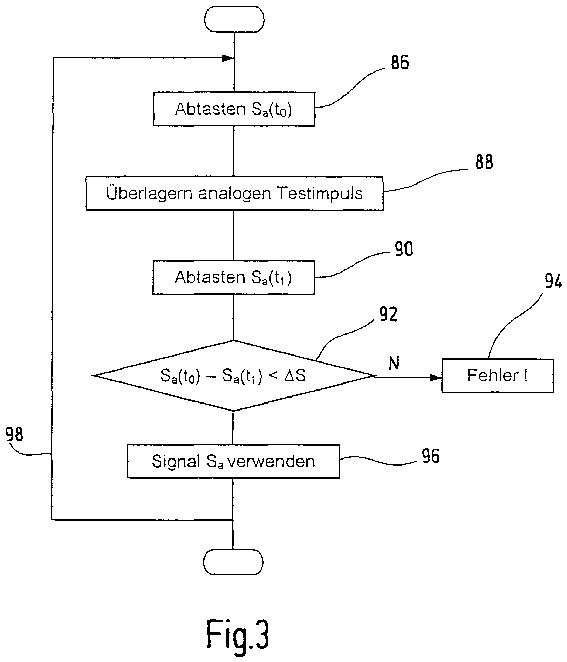

Fig. 3 zeigt ein vereinfachtes Flussdiagramm für ein Ausführungsbeispiel des neuen Verfahrens. Im Schritt 86 wird das Kombinationssignal 29 (Sₐ) am Ausgang des Addierers 20 abgetastet. Bspw. wird hier der Abtastwert 70 aus Fig. 2 entnommen und in einen digitalen Wert umgewandelt. Gemäß Schritt 88 erfolgt für den nächsten Abtastwert im Schritt 90 die Überlagerung eines analogen Testimpulses 66. Der Abtastwert 72 setzt sich daher aus dem Momentanwert des analogen Eingangssignals 28 und dem Momentanwert des addierten Testimpulses 66 zusammen. Mit anderen Worten ist der Abtastwert 72 (Sₐ(t₁) in dem Flussdiagramm der Fig. 3) um den Momentanwert des Testimpulses 66 höher als das eigentliche Analogsignal 28.

Im Schritt 92 werden die beiden aufeinander folgenden Abtastwerte Sₐ(t₀) und Sₐ(t₁) voneinander subtrahiert. Außerdem wird überprüft, ob die Differenz kleiner als ein festgelegter Schwellenwert ΔS ist. Ist die Betragsdifferenz größer als der festgelegte Schwellenwert, so liegt ein Funktionsfehler vor, der gemäß Schritt 94 eine Reaktion auslöst, bspw. das Abschalten des Motors 12. Ist die Betragsdifferenz hingegen kleiner als der festgelegte Schwellenwert ΔS, kann der um den überlagerten Testimpuls 66 bereinigte Momentanwert des Kombinationssignals verwendet werden (Schritt 96). Die Verfahrensschritte 86 bis 96 werden iterativ wiederholt (Schleife 98).

Mit dem Verfahren aus Fig. 3 kann die Funktion des Eingangskreises 14 und insbesondere die Funktion des A/D-Wandlers 22 überprüft werden und das analoge Eingangssignal kann ohne Unterbrechung aufgenommen und verarbeitet werden. Die anhand des Testimpulses 66 beschriebene Situation wird jedoch etwas schwieriger, wenn sich das analoge Eingangssignal zwischen zwei Abtastwerten verändert. Diese Situation ist bei dem Testimpuls 68 dargestellt. Die Differenzbildung aus Schritt 92 führt nun zu einer relativ großen Differenz ΔS, die in Fig. 2 bei Bezugsziffer 100 angegeben ist. Auf Grund des Tiefpassfilters 18 kann das Analogsignal 28 von einem Abtastwert zum nächsten jedoch nur eine begrenzte Signaländerung erfahren. Legt man diese maximal mögliche Signaländerung (zuzüglich einer Toleranzbeigabe) als maximalen zulässigen Schwellenwert ΔS fest, liefert das neue Verfahren auch für diesen schwierigen Fall eine zuverlässige Aussage über die Funktionsfähigkeit der Komponenten im Eingangskreis 14.

Um den A/D-Wandler 22 über seinen gesamten Arbeitsbereich hinweg zu testen, wird in bevorzugten Ausführungsbeispielen der Erfindung ein variables Testsignal über das analoge Eingangssignal 28 gelegt. Das variable Testsignal kann bspw. Testimpulse 66, 68 mit unterschiedlicher Amplitude und/oder unterschiedlichen Vorzeichen beinhalten. In einfacherem Ausführungsbeispiel kann jedoch auch ein gleichbleibender Testimpuls 66, 68 verwendet werden. Darüber hinaus kann grundsätzlich auch ein nicht-pulsförmiges Analogsignal als Testsignal verwendet werden, sofern die Anteile des Testsignals zu jedem Abtastwert bekannt sind. Darüber hinaus ist es grundsätzlich denkbar, ein Testsignal nicht additiv, sondern bspw. multiplikativ zu überlagern, wobei die anschließende Signaltrennung dann aufwändiger wird. Im Falle einer multiplikativen Überlagerung könnte die Signaltrennung mithilfe einer Fourieranalyse durchgeführt werden (hier nicht dargestellt).

Mit dem beschriebenen Verfahren lassen sich vor allem Code-Fehler und Verstärkungsfehler des A/D-Wandlers 22 erkennen. Bei Verwendung eines variablen Testsignals können auch Linearitätsfehler des A/D-Wandlers 22 erkannt werden. Offsetfehler des A/D-Wandlers 22 lassen sich erkennen, wenn das analoge Eingangssignal 28 kurzzeitig weggeschaltet wird, was bspw. mithilfe eines vor oder nach dem Tiefpassfilter 18 angeordneten Schaltelements (hier nicht dargestellt) realisiert werden kann. Da bei dem Verfahren gemäß Fig. 3 die Plausibilität von aufeinander folgenden Abtastwerten überwacht wird, eignet sich dieses Verfahren besonders gut für eine Sicherheitsschaltvorrichtung 10, die nur einen einkanaligen Eingangskreis 14 besitzt. Darüber hinaus kann bei einem redundanten Eingangskreis 14 auch ein Plausibilitätsvergleich zwischen den Abtastwerten der beiden redundanten Kanäle vorgenommen werden, was eine erhöhte Sicherheit ermöglicht.

Nachdem die Abtastwerte 70 bis 76 rechnerisch wieder von dem überlagerten Testsignal "befreit" wurden, können sie zur Regelung des Motors 12 verwendet werden. Hierzu stellt die Auswerte- und Steuereinheit 34 aus Fig. 1 an dem Ausgang 58 ein entsprechendes Steuersignal bereit, das sich in Abhängigkeit von dem analogen Eingangssignal 28, nicht jedoch in Abhängigkeit von dem Testsignal 27 verändert. Im Unterschied dazu hängt die Schaltstellung der Ausgangsschaltelemente 40, 42 in erster Linie davon ab, ob die Fehlerüberwachung mithilfe des Testsignals 27 eine fehlerfreie Funktion im Eingangskreis 14 signalisiert.

In dem in Fig. 1 dargestellten Ausführungsbeispiel schaltet die neue Sicherheitsschaltvorrichtung 10 den Motor fehlersicher ab, wenn mit Hilfe des neuen Verfahrens eine Fehlerzustand erkannt wurde und/oder wenn das am Eingang 16 aufgenommene Analogsignal einen Grenzwert über- oder unterschreitet. Alternativ hierzu kann in einer vorzugsweise redundanten Realisierung auch ein Warnsignal mit Hilfe des zumindest einen Ausgangsschaltelements erzeugt werden, das beispielsweise dazu führt, dass der aufgenommene Analogwert nicht weiter verarbeitet wird. Steht ein zweiter Analogkanal zur Verfügung, kann allein mit dessen Eingangssignal weitergearbeitet werden.

## Patentansprüche

1. Sicherheitsschaltvorrichtung, insbesondere zum sicheren Abschalten eines Verbrauchers (12) in einer automatisiert arbeitenden Anlage, mit zumindest einem Eingang (16) zum Aufnehmen eines analogen Eingangssignals (28), mit einem A/D-Wandler (22), der das analoge Eingangssignal (28) in ein digitales Signal (31) wandelt, mit einer Auswerte- und Steuereinheit (34), der das digitale Signal (31) zugeführt ist, mit zumindest einem Ausgangsschaltelement (40, 42), das von der Auswerte- und Steuereinheit (34) in Abhängigkeit von dem digitalen Signal (31) angesteuert wird, und mit einem analogen Signalkombinierer (20), der dazu ausgebildet ist, dem analogen Eingangssignal (28) ein analoges Testsignal (27; 66, 68) zu überlagern, um ein analoges Kombinationssignal (29) zu bilden, wobei dem A/D-Wandler (22) das analoge Kombinationssignal (29) zugeführt ist, **dadurch gekennzeichnet, dass** das analoge Testsignal (27) ein pulsförmiges Signal mit Pulsabständen (DP) ist, die größer als die Abtastintervalle (78) des A/D-Wandlers (22) sind.

2. Sicherheitsschaltvorrichtung nach Anspruch 1, **gekennzeichnet durch** einen D/A-Wandler (26), der das analoge Testsignal (27) aus einem digitalen Testsignal (60) erzeugt.

3. Sicherheitsschaltvorrichtung nach Anspruch 2, **dadurch gekennzeichnet, dass** die Auswerte- und Steuereinheit (34) das digitale Testsignal erzeugt und an den D/A-Wandler (26) überträgt.

4. Sicherheitsschaltvorrichtung nach einem der Ansprüche 1 bis 3, **dadurch gekennzeichnet, dass** der analoge Signalkombinierer (20) ein analoger Addierer ist.

5. Sicherheitsschaltvorrichtung nach einem der Ansprüche 1 bis 4, **gekennzeichnet durch** ein Tiefpassfilter (18), das zwischen dem Eingang (16) und dem analogen Signalkombinierer (20) angeordnet ist.

6. Sicherheitsschaltvorrichtung nach einem der Ansprüche 1 bis 5, **dadurch gekennzeichnet, dass** der A/D-Wandler (22) einen maximalen Wandlerbereich (80) besitzt, der größer ist als ein maximaler Dynamikbereich (82) des analogen Eingangssignals (28).

7. Sicherheitsschaltvorrichtung nach einem der Ansprüche 1 bis 6, **dadurch gekennzeichnet, dass** die Auswerte- und Steuereinheit (34) dazu ausgebildet ist, aufeinander folgende Werte des digitalen Signals (31) miteinander zu vergleichen (92) und ein Fehlersignal (94) zu erzeugen, wenn sich die aufeinander folgenden Werte um mehr als einen definierten Differenzwert (ΔS) voneinander unterscheiden.

8. Sicherheitsschaltvorrichtung nach einem der Ansprüche 1 bis 7, **gekennzeichnet durch** zumindest einen Ausgang (58), der in Abhängigkeit von dem analogen Eingangssignal (28), jedoch unabhängig von dem analogen Testsignal (27) variiert.

9. Sicherheitsschaltvorrichtung nach einem der Ansprüche 1 bis 8, **gekennzeichnet durch** zumindest zwei Eingänge (16, 16') zur Aufnahme von zumindest zwei analogen Eingangssignalen (28, 28') und zumindest zwei analoge Signalkombinierer (20, 20'), die dazu ausgebildet sind, jedem der zumindest zwei analogen Eingangssignale (28, 28') ein analoges Testsignal (27) zu überlagern.

10. Sicherheitsschaltvorrichtung nach Anspruch 9, **dadurch gekennzeichnet, dass** die Auswerte- und Steuereinheit (34) dazu ausgebildet ist, zwei zueinander invertierte analoge Eingangssignale (28, 28') auszuwerten.

11. Sicherheitsschaltvorrichtung nach einem der Ansprüche 1 bis 10, **dadurch gekennzeichnet, dass** die Auswerte- und Steuereinheit (34) räumlich getrennt von dem A/D-Wandler (22) und dem analogen Signalkombinierer (20) angeordnet ist, wobei am Ausgang des A/D-Wandlers (22) eine Hilfssteuereinheit (24) angeordnet ist, die mit der Auswerte- und Steuereinheit (34) kommuniziert.

12. Verfahren zum sicheren Abschalten eines Verbrauchers (12) in einer automatisiert arbeitenden Anlage, mit den Schritten:
- Aufnehmen von zumindest einem analogen Eingangssignal (28),
- Wandeln des analogen Eingangssignals (28) in ein digitales Signal (31),
- Auswerten des digitalen Signals (31) und
- Ansteuern eines Ausgangsschaltelements (40, 42) in Abhängigkeit von dem digitalen Signal (31),
wobei dem analogen Eingangssignal (28) ein analoges Testsignal (27) überlagert wird, um ein analoges Kombinationssignal (29) zu bilden, und wobei das analoge Kombinationssignal (29) in das digitale Signal (31) gewandelt wird, **dadurch gekennzeichnet, dass** das analoge Testsignal (27) ein pulsförmiges Signal mit Pulsabständen (DP) ist, die größer als die Abtastintervalle (78) des A/D-Wandlers (22) sind.

## Claims

1. A safety switching apparatus, in particular for safe disconnection of a load (12) in an automated installation, comprising at least one input (16) for receiving an analog input signal (28), comprising an A/D converter (22) which converts the analog input signal (28) to a digital signal (31), comprising an evaluation and control unit (34) to which the digital signal (31) is supplied, comprising at least one output switching element (40, 42) which is controlled by the evaluation and control unit (34) as a function of the digital signal (31), and comprising an analog signal combiner (20) designed to superimpose an analog test signal (27; 66, 68) on the analog input signal (28) in order to form an analog combination signal (29), wherein the A/D converter (22) is supplied with the analog combination signal (29), **characterized in that** the analog test signal (27) is a pulsed signal with pulse intervals (DP) which are greater than the sampling intervals (78) of the A/D converter (22).

2. The safety switching apparatus of claim 1, **characterized by** a D/A converter (26) which produces the analog test signal (27) from a digital test signal (60).

3. The safety switching apparatus of claim 2, **characterized in that** the evaluation and control unit (34) produces the digital test signal and transmits it to the D/A converter (26).

4. The safety switching apparatus of one of claims 1 to 3, **characterized in that** the analog signal combiner (20) is an analog adder.

5. The safety switching apparatus of one of claims 1 to 4, **characterized by** a lowpass filter (18) which is arranged between the input (16) and the analog signal combiner (20).

6. The safety switching apparatus of one of claims 1 to 5, **characterized in that** the A/D converter (22) has a maximum converter range (80) which is wider than the maximum dynamic range (82) of the analog input signal (28).

7. The safety switching apparatus of one of claims 1 to 6, **characterized in that** the evaluation and control unit (34) is designed to compare (92) successive values of the digital signal (31) with one another and to produce a fault signal (94) when the successive values differ from one another by more than a defined difference value (ΔS).

8. The safety switching apparatus of one of claims 1 to 7, **characterized by** at least one output (58) which varies as a function of the analog input signal (28) but is independent of the analog test signal (27).

9. The safety switching apparatus of one of claims 1 to 8, **characterized by** at least two inputs (16, 16') for receiving at least two analog input signals (28, 28'), and at least two analog signal combiners (20, 20') which are designed to superimpose an analog test signal (27) on each of the at least two analog input signals (28, 28').

10. The safety switching apparatus of claim 9, **characterized in that** the evaluation and control unit (34) is designed to evaluate two analog input signals (28, 28') which are inverted with respect to one another.

11. The safety switching apparatus of one of claims 1 to 10, **characterized in that** the evaluation and control unit (34) is arranged physically separately from the A/D converter (22) and the analog signal combiner (20), wherein an auxiliary control unit (24) communicating with the evaluation and control unit (34) is arranged at the output of the A/D converter (22).

12. A method for safe disconnection of a load (12) in an automated installation, comprising the following steps:
- receiving at least one analog input signal (28),
- converting the analog input signal (28) to a digital signal (31),
- evaluating the digital signal (31), and
- controlling an output switching element (40, 42) as a function of the digital signal (31),
wherein an analog test signal (27) is superimposed on the analog input signal (28) in order to form an analog combination signal (29), and the analog combination signal (29) is converted to the digital signal (31), **characterized in that** the analog test signal (27) is a pulsed signal with pulse intervals (DP) which are greater than the sampling intervals (78) of the A/D converter (22).

## Revendications

1. Dispositif de commutation de sécurité, notamment pour la mise hors circuit sécurisée d'un consommateur (12) dans un équipement à fonctionnement automatisé, comprenant au moins une entrée (16) destinée à l'admission d'un signal d'entrée analogique (28), comprenant un convertisseur A/N (22) qui convertit le signal d'entrée analogique (28) en un signal numérique (31), comprenant une unité d'interprétation et de commande (34) à laquelle est acheminé le signal numérique (31), comprenant au moins un élément de commutation de sortie (40, 42), qui est commandé par l'unité d'interprétation et de commande (34) en fonction du signal numérique (31), et comprenant un combineur de signaux analogique (20) qui est conçu pour superposer un signal de test analogique (27 ; 66, 68) au signal d'entrée analogique (28) afin de former un signal combiné analogique (29), le signal combiné analogique (29) étant acheminé au convertisseur A/N (22), **caractérisé en ce que** le signal de test analogique (27) est un signal impulsionnel avec des écarts entre impulsions (DP) qui sont supérieurs à l'intervalle d'échantillonnage (78) du convertisseur A/N (22).

2. Dispositif de commutation de sécurité selon la revendication 1, **caractérisé par** un convertisseur N/A (26) qui génère le signal de test analogique (27) à partir d'un signal de test numérique (60).

3. Dispositif de commutation de sécurité selon la revendication 2, **caractérisé en ce que** l'unité d'interprétation et de commande (34) génère le signal de test numérique et le transmet au convertisseur N/A (26).

4. Dispositif de commutation de sécurité selon l'une des revendications 1 à 3, **caractérisé en ce que** le combineur de signaux analogique (20) est un additionneur analogique.

5. Dispositif de commutation de sécurité selon l'une des revendications 1 à 4, **caractérisé par** un filtre passe-bas (18) qui est disposé entre l'entrée (16) et le combineur de signaux analogique (20).

6. Dispositif de commutation de sécurité selon l'une des revendications 1 à 5, **caractérisé en ce que** le convertisseur A/N (22) possède une plage de conversion maximale (80) qui est supérieure à une plage dynamique maximale (82) du signal d'entrée analogique (28).

7. Dispositif de commutation de sécurité selon l'une des revendications 1 à 6, **caractérisé en ce que** l'unité d'interprétation et de commande (34) est configurée pour comparer (92) entre elles les valeurs successives du signal numérique (31) et générer un signal de défaut (94) lorsque les valeurs successives se différentient entre elles de plus d'une valeur différentielle (ΔS) définie.

8. Dispositif de commutation de sécurité selon l'une des revendications 1 à 7, **caractérisé par** au moins une sortie (58) qui varie en fonction du signal d'entrée analogique (28), toutefois indépendamment du signal de test analogique (27).

9. Dispositif de commutation de sécurité selon l'une des revendications 1 à 8, **caractérisé par** au moins deux entrées (16, 16') destinées à l'admission d'au moins deux signaux d'entrée analogiques (28, 28') et au moins deux combineurs de signaux analogiques (20, 20') qui sont configurés pour superposer un signal de test analogique (27) à chacun des au moins deux signaux d'entrée analogiques (28, 28').

10. Dispositif de commutation de sécurité selon la revendication 9, **caractérisé en ce que** l'unité d'interprétation et de commande (34) est configurée pour interpréter deux signaux d'entrée analogiques (28, 28') inversés l'un par rapport à l'autre.

11. Dispositif de commutation de sécurité selon l'une des revendications 1 à 10, **caractérisé en ce que** l'unité d'interprétation et de commande (34) est disposée séparée dans l'espace du convertisseur A/N (22) et du combineur de signaux analogique (20), une unité de commande auxiliaire (24) étant disposée à la sortie du convertisseur A/N (22), laquelle communique avec l'unité d'interprétation et de commande (34).

12. Procédé de mise hors circuit sécurisée d'un consommateur (12) dans un équipement à fonctionnement automatisé, comprenant les étapes suivantes :
- admission d'au moins un signal d'entrée analogique (28),
- conversion du signal d'entrée analogique (28) en un signal numérique (31),
- interprétation du signal numérique (31) et
- commande d'un élément de commutation de sortie (40, 42) en fonction du signal numérique (31),
un signal de test analogique (27) étant superposé au signal d'entrée analogique (28) afin de former un signal combiné analogique (29), et le signal combiné analogique (29) étant converti en le signal numérique (31), **caractérisé en ce que** le signal de test analogique (27) est un signal impulsionnel avec des écarts entre impulsions (DP) qui sont supérieurs à l'intervalle d'échantillonnage (78) du convertisseur A/N (22).
